(19) **Europäisches Patentamt / European Patent Office / Office européen des brevets**

(11) **EP 1 861 679 B1**

(12) **FASCICULE DE BREVET EUROPEEN**

(45) Date de publication et mention
de la délivrance du brevet:
**02.03.2016 Bulletin 2016/09**

(21) Numéro de dépôt: **06726220.4**

(22) Date de dépôt: **06.03.2006**

(51) Int Cl.:
*G06T 19/00* (2011.01)        *G06T 17/20* (2006.01)
*G06T 17/10* (2006.01)        *G06T 17/00* (2006.01)
*G01B 7/287* (2006.01)

(86) Numéro de dépôt international:
**PCT/FR2006/050196**

(87) Numéro de publication internationale:
**WO 2006/095109 (14.09.2006 Gazette 2006/37)**

(54) **PROCEDE ET DISPOSITIF D'ACQUISITION D'UNE FORME GEOMETRIQUE**

VERFAHREN UND VORRICHTUNG ZUR ERLANGUNG EINER GEOMETRISCHEN FORM

METHOD AND DEVICE FOR ACQUIRING A GEOMETRIC FORM

(84) Etats contractants désignés:
**AT BE BG CH CY CZ DE DK EE ES FI FR GB GR HU IE IS IT LI LT LU LV MC NL PL PT RO SE SI SK TR**

(30) Priorité: **09.03.2005 FR 0550620**

(43) Date de publication de la demande:
**05.12.2007 Bulletin 2007/49**

(73) Titulaire: **Commissariat à l'Énergie Atomique et aux Énergies Alternatives
75015 Paris (FR)**

(72) Inventeurs:
• **DAVID, Dominique**
**F-38640 Claix (FR)**
• **SPRYNSKI, Nathalie**
**F-30132 Caissargues (FR)**

(74) Mandataire: **Ahner, Philippe et al
BREVALEX
95, rue d'Amsterdam
75378 Paris Cedex 8 (FR)**

(56) Documents cités:
**US-A- 6 127 672          US-A1- 2002 025 074
US-A1- 2003 030 443      US-A1- 2004 139 801**

• NERINO R ET AL: "A SURFACE PROFILE RECONSTRUCTION METHOD BASED ON MULTISENSOR CAPACITIVE TRANSDUCERS" MEASUREMENT, INSTITUTE OF MEASUREMENT AND CONTROL. LONDON, GB, vol. 13, no. 1, 1 mars 1994 (1994-03-01), pages 77-84, XP000442468 ISSN: 0263-2241

**Description**

## DOMAINE TECHNIQUE

La présente invention concerne un procédé et un dispositif d'acquisition d'une forme géométrique qui peut être une ligne ou une surface.

Elle concerne ainsi l'acquisition de courbes et de surfaces qui peuvent être planes mais sont généralement gauches (en anglais, *warped*).

L'invention concerne donc, plus particulièrement, l'acquisition tridimensionnelle (ou acquisition 3D) de formes (lignes ou surfaces).

Elle s'applique notamment :

- aux domaines de l'usinage, de la menuiserie, de la maçonnerie, du bâtiment et de la fabrication de biens de consommation courante,
- au contrôle de formes,
- à l'acquisition de formes gauches, telles que les carrosseries d'automobile par exemple, et
- à l'étude de flux laminaires, dans le cadre d'études d'aérodynamique ou d'hydrodynamique, par suivi temporel de capteurs appropriés, flottant dans un gaz ou un liquide en mouvement.

## ÉTAT DE LA TECHNIQUE ANTÉRIEURE

On connaît déjà une technique d'acquisition 3D qui utilise une triangulation par laser ; mais cette technique est coûteuse, conduit à la génération de parties cachées des objets auxquels elle est appliquée et, surtout, nécessite des algorithmes de reconstruction qui sont difficiles à maîtriser.

On connaît en outre une autre technique d'acquisition 3D qui utilise le mouvement d'une ou plusieurs caméras vidéo pour faire des enregistrements stéréoscopiques des objets étudiés. Mais cette autre technique est généralement coûteuse et complexe.

De plus, dans les deux cas, un équipement extérieur à l'objet étudié est nécessaire.

Le document US 6 127 672 divulgue un dispositif de mesure de forme. La technique utilisée est fondée sur des mesures de courbure et de torsion. Ces mesures sont effectuées par des capteurs fixés à des distances connues sur un substrat flexible.

Le document US 2002/025074 divulgue un procédé d'estimation d'une forme à partir de données concernant des coordonnées et des vecteurs normaux.

L'article intitulé « A surface profile reconstruction method based on multisensor capacitive transducers », measurement, Institue of Measurement and Control, London, GB, vol. 13, n° 1, 1 mars 1994, pages 77-84, décrit un procédé de reconstruction du profil d'une surface. Ce procédé est sans contact, et utilise des transducteurs capacitifs.

Le document US 2003/030443 concerne un système pour mesurer la forme d'objets. Ce système utilise des capteurs électrostatiques qui sont donc sans contact.

Le document US 2004/139801 divulgue un procédé permettant d'étudier l'intégrité d'une structure et non pas d'en déterminer la forme.

## EXPOSÉ DE L'INVENTION

La présente invention a pour but de remédier aux inconvénients précédents, en proposant une technique d'acquisition qui est plus simple, moins coûteuse et plus facile à mettre en oeuvre que les techniques connues, mentionnées plus haut.

Elle permet de faire, de façon simple, la description tridimensionnelle d'un objet, du point de vue géométrique.

L'invention s'applique aussi bien à un objet rigide qu'à un objet souple, par exemple un vêtement. Dans ce dernier cas, l'invention permet aussi de décrire les variations de la forme de l'objet en fonction du temps.

Cette invention est applicable en situation réelle ; par exemple, analyser en situation réelle le comportement de traînée d'une voiture ou d'une aile d'avion devient envisageable.

Selon un aspect particulier de l'invention, on utilise des capteurs (en anglais, *sensors*) angulaires, répartis sur une courbe ou une surface qui est apte à épouser la forme à déterminer. Par un procédé de traitement du signal, on détermine les coordonnées de chacun des points en lesquels se situent les capteurs. On peut ainsi en déduire la répartition spatiale des points qui constituent la forme étudiée.

Il convient en outre de noter que l'on peut théoriquement utiliser des techniques classiques pour fabriquer des capteurs permettant la mise en oeuvre de la présente invention. Cependant, seules les microtechnologies ou les nanotechnologies sont susceptibles de permettre le développement de l'invention.

En effet, les microtechnologies ou les nanotechnologies autorisent le recours à des capteurs, ou éléments de mesure, dont le poids est négligeable devant l'ensemble d'un dispositif pour la mise en oeuvre de l'invention. Ainsi un matériau quelconque peut-il être transformé pour mettre en oeuvre l'invention sans que les caractéristiques mécaniques initiales du matériau en soient sensiblement affectées.

En outre, les microtechnologies ou les nanotechnologies permettent de recourir à un nombre important de points de mesure dans le matériau, à savoir des centaines et même des milliers de points, ou plus, ce qui permet d'élargir le champ des applications de l'invention.

De façon précise, la présente invention a pour objet un procédé d'acquisition d'une forme géométrique, à savoir une courbe ou une surface, par détermination des coordonnées des points de cette courbe ou de cette surface, ce procédé étant caractérisé en ce que :

- on place sur cette forme un ensemble de capteurs, les capteurs étant choisis parmi les accéléromètres ou les magnétomètres, chaque accéléromètre étant capables de restituer une inclinaison par rapport à la direction verticale et chaque magnétomètre étant capable de restituer une inclinaison par rapport à la direction du champ magnétique terrestre, en tant que signaux représentatifs de l'orientation de la courbe ou de la surface à l'emplacement de ce capteur,

- on choisit un modèle mathématique de la courbe ou de la surface,
- à partir des signaux, on détermine les paramètres du modèle mathématique, et
- à partir de ces paramètres, on détermine la répartition spatiale des points de la forme géométrique.

Selon un premier mode de mise en oeuvre particulier du procédé objet de l'invention, les capteurs sont fixés à un support fait d'une matière solide et déformable, apte à épouser la forme à acquérir.

Ce support peut former une ligne ou une surface.

Selon un premier mode de réalisation particulier de l'invention, le support est souple.

Dans ce cas, si la forme à acquérir présente une ou plusieurs fréquences spatiales maximales et le nombre des capteurs est au moins égal, par unité de longueur ou de surface, à deux fois la valeur de la fréquence maximale, alors on peut échantillonner localement la courbe ou la surface grâce aux capteurs.

Selon un deuxième mode de mise en oeuvre particulier du procédé objet de l'invention, les capteurs sont mécaniquement indépendants les uns des autres (au lieu d'être rendus solidaires les uns des autres, par exemple par l'intermédiaire d'un support), et l'on reconstruit de proche en proche la forme à acquérir, à partir des signaux fournis par les capteurs.

Dans l'invention, on peut acquérir la forme d'une courbe ou d'une surface qui délimite un objet.

Mais, dans le cas de l'utilisation du support, fait de la matière solide et déformable, on peut acquérir la forme intrinsèque de cette matière elle-même.

Dans l'invention, chaque capteur peut être en outre prévu pour déterminer la distance qui le sépare des capteurs voisins, et l'on reconstruit alors de proche en proche la forme à acquérir.

La présente invention concerne également un dispositif d'acquisition d'une forme géométrique, à savoir une courbe ou une surface, ce dispositif étant caractérisé en ce qu'il comprend :

- un ensemble de capteurs, les capteurs étant choisis parmi les accéléromètres ou les magnétomètres, chaque accéléromètre étant capables de restituer une inclinaison par rapport à la direction verticale et chaque magnétomètre étant capable de restituer une inclinaison par rapport à la direction du champ magnétique terrestre, en tant que signaux représentatifs de l'orientation de la courbe ou de la surface à l'emplacement de ce capteur, et

- des moyens électroniques de traitement des signaux fournis par les capteurs, ces moyens étant prévus pour déterminer, à partir d'un modèle mathématique de la courbe ou de la surface, les paramètres du modèle mathématique et pour déterminer, à partir de ces coordonnées, la répartition spatiale des points de la forme géométrique.

Selon un premier mode de réalisation particulier du dispositif objet de l'invention, les capteurs sont fixés à un support fait d'une matière solide et déformable, apte à épouser la forme à acquérir.

Selon un deuxième mode de réalisation particulier, les capteurs sont mécaniquement indépendants les uns des autres.

## BRÈVE DESCRIPTION DES DESSINS

La présente invention sera mieux comprise à la lecture de la description d'exemples de réalisation donnés ci-après, à titre purement indicatif et nullement limitatif, en faisant référence aux dessins annexés, sur lesquels :

- la figure 1A est vue schématique d'un mode de réalisation particulier du dispositif objet de l'invention, permettant l'acquisition d'une courbe,
- la figure 1B est une vue schématique d'un autre mode de réalisation particulier du dispositif objet de l'invention, permettant l'acquisition d'une surface,
- la figure 2 est une vue schématique et partielle d'un support sans rigidité, que l'on peut utiliser dans l'invention,
- la figure 3 est une vue schématique et partielle d'un support utilisable dans l'invention, formant une ligne dont chaque portion, comprise entre deux capteurs, est assimilée à un segment de droite, et
- la figure 4 est une vue schématique et partielle d'un support rigide que l'on peut utiliser dans l'invention.

## EXPOSÉ DÉTAILLÉ DE MODES DE RÉALISATION PARTICULIERS

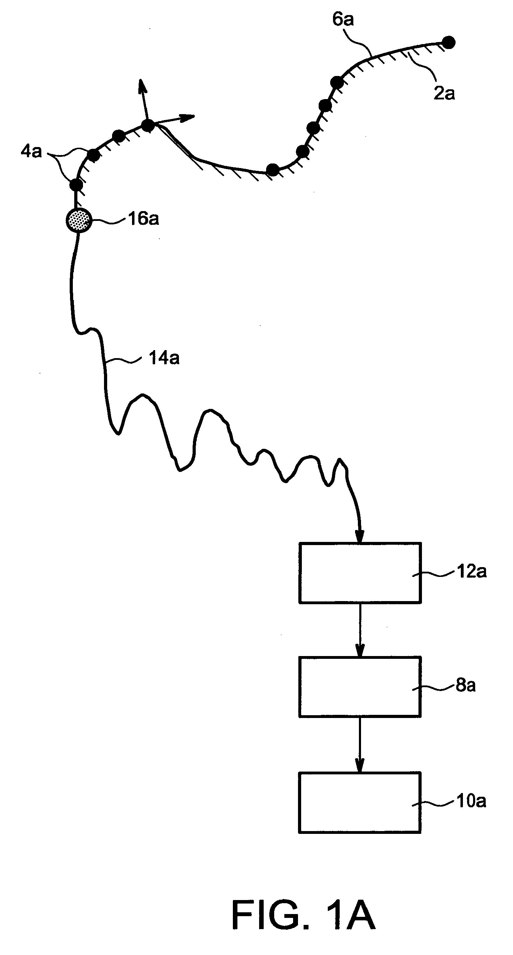

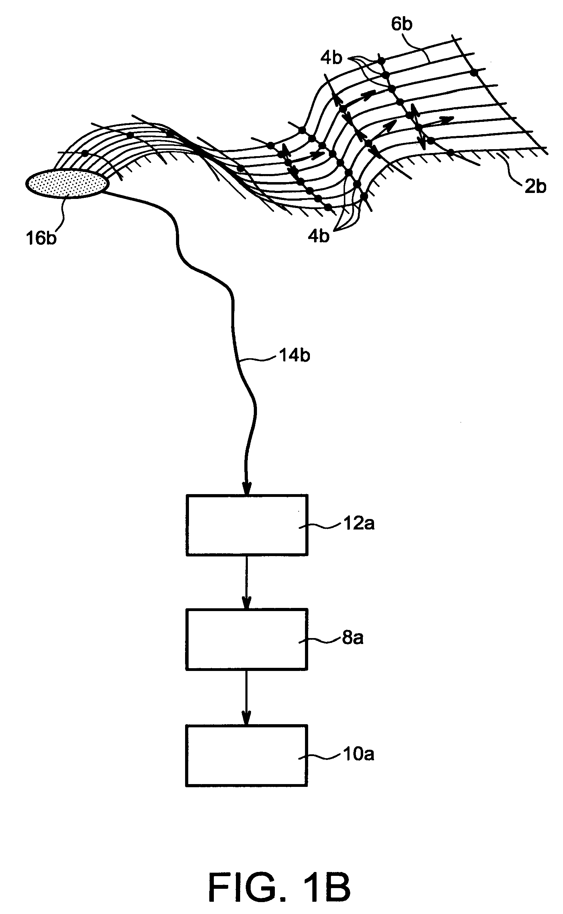

Les figures 1A et 1B sont des vues schématiques de modes de réalisation particuliers du dispositif d'acquisition de forme géométrique, objet de l'invention, permettant l'acquisition d'une courbe ou d'une surface.

Le dispositif de la figure 1A permet l'acquisition d'une courbe qui délimite un objet 2a, tandis que le dispositif de la figure 1B permet l'acquisition d'une surface qui délimite un autre objet 2b.

Le dispositif de la figure 1A ou 1B comprend un ensemble de capteurs 4a ou 4b, que l'on place sur la courbe délimitant l'objet 2a ou sur la surface délimitant l'objet 2b. Chaque capteur est prévu pour fournir des signaux électriques, représentatifs de l'orientation de cette courbe ou de cette surface, à l'emplacement du capteur considéré.

Les capteurs 4a ou 4b, qui sont par exemple des accéléromètres ou des magnétomètres, sont fixés à un support 6a ou 6b, qui est fait d'une matière solide et déformable, apte à épouser la forme que l'on veut acquérir.

Dans l'exemple de la figure 1A, le support 6a forme une ligne, tandis que dans l'exemple de la figure 1B, le support 6b forme une surface.

Le dispositif de la figure 1A ou 1B comprend en outre des moyens électroniques de traitement 8a ou 8b, prévus pour traiter les signaux fournis par les capteurs 4a ou 4b, pour déterminer les coordonnées de chacun des points en lesquels se trouvent ces capteurs et pour déterminer aussi, à partir de ces coordonnées, la répartition spatiale des points de la courbe 2a ou de la surface 2b.

Sur la figure 1A ou 1B, on voit en outre des moyens d'affichage 10a ou 10b, permettant l'affichage des résultats des calculs effectués par les moyens électroniques de traitement 8a ou 8b.

On voit aussi des moyens d'acquisition 12a ou 12b, permettant l'acquisition des mesures effectuées au moyen des capteurs 4a ou 4b. Les mesures acquises par les moyens 12a ou 12b sont transmises aux moyens électroniques de traitement 8a ou 8b.

Les capteurs 4a ou 4b sont reliés aux moyens d'acquisition 12a ou 12b par l'intermédiaire de liaisons filaires ou sans fil 14a ou 14b.

Sur la figure 1A ou 1B, la référence 16a ou 16b représente (de façon facultative) une électronique qui est embarquée sur le support et sert à collecter les informations en provenance des capteurs et à les transmettre (éventuellement sans fil) à un dispositif de calcul.

Revenons sur le support utilisé dans l'invention. Ce support est fait d'une matière suffisamment flexible pour épouser la forme mesurée. Comme on l'a vu, ce support peut s'étendre suivant une ligne ou une surface. Dans ces deux cas, le support peut être totalement libre. Ce peut être, par exemple, une simple ficelle dans le cas où il forme une ligne.

Au contraire, ce support peut disposer de propriétés de flexibilité particulières (par exemple une courbure maximale autorisée ou une élasticité contrôlée) ou disposer de propriétés intermédiaires entre le cas du support totalement libre et le cas du support ayant une flexibilité particulière. A titre d'exemple, on peut citer les règles souples utilisées par les architectes en tant que supports ayant ces propriétés intermédiaires.

Les capteurs, qui sont disposés sur le support, sont capables de restituer une information géométrique.

A titre d'exemple, on peut utiliser de simples accéléromètres qui sont capables de restituer chacun une inclinaison par rapport à la direction verticale. On peut aussi utiliser des accéléromètres bi-axes qui restituent chacun deux inclinaisons par rapport à la direction verticale. On peut aussi utiliser des magnétomètres qui restituent chacun une inclinaison par rapport à la direction du champ magnétique terrestre.

Dans l'invention, on peut aussi utiliser des capteurs tels que chacun d'entre eux soit non seulement capable de restituer une information géométrique mais encore de déterminer la distance qui le sépare des capteurs constituant ses plus proches voisins. A titre d'exemple, de tels capteurs peuvent être constitués par des microsystèmes radiofréquences établissant la distance qui les sépare par un procédé classique de triangulation ou de mesure de temps de vol.

Comme on l'a vu, les capteurs sont électriquement reliés à des moyens d'acquisition électronique. Il peut être commode d'utiliser un bus-série entre tout ou partie des capteurs, de façon à limiter le nombre de fils requis pour collecter les informations. De plus, les moyens de traitement, qui sont reliés à ces moyens d'acquisition, sont typiquement un ordinateur tel qu'un ordinateur personnel (PC).

Un dispositif conforme à l'invention peut être utilisé pour acquérir

    (a) la forme d'une courbe ou d'une surface donnée, par exemple le gabarit d'une découpe gauche ou la surface d'un meuble, ou
    (b) la forme intrinsèque de la matière dont est constitué le support, par exemple dans le cas où l'on souhaite déterminer la manière dont un textile tombe.

Les procédés conformes à l'invention, qui sont décrits ci-après, sont toujours valables dans le premier cas (a). En revanche, ils ne sont valables, dans le deuxième cas (b), que dans la mesure où le poids des éléments de mesure, à savoir les capteurs, et la rigidité éventuelle, dûe à l'interconnexion des capteurs, ne modifient pas le comportement intrinsèque de la matière du support. Cela est rendu possible par l'utilisation des microtechnologies.

On peut tout de même envisager un autre dispositif conforme à l'invention, utilisant des capteurs ayant des poids non négligeables par rapport au poids de la matière servant de support à ces capteurs. Cependant, dans ce cas, le procédé de reconstruction de cette matière, c'est-à-dire le procédé de détermination de la forme épousée par cette matière, est beaucoup plus complexe, si tant est qu'un tel procédé puisse être mis en oeuvre.

On se trouve donc dans un cas où la miniaturisation va au-delà d'un simple facteur d'échelle et apporte une faisabilité nouvelle.

Comme on l'a vu, pour la mise en oeuvre du procédé objet de l'invention, on place le support au contact d'un objet que l'on veut mesurer. Plusieurs cas se présentent.

1. Support sans rigidité, par exemple du genre d'une ficelle

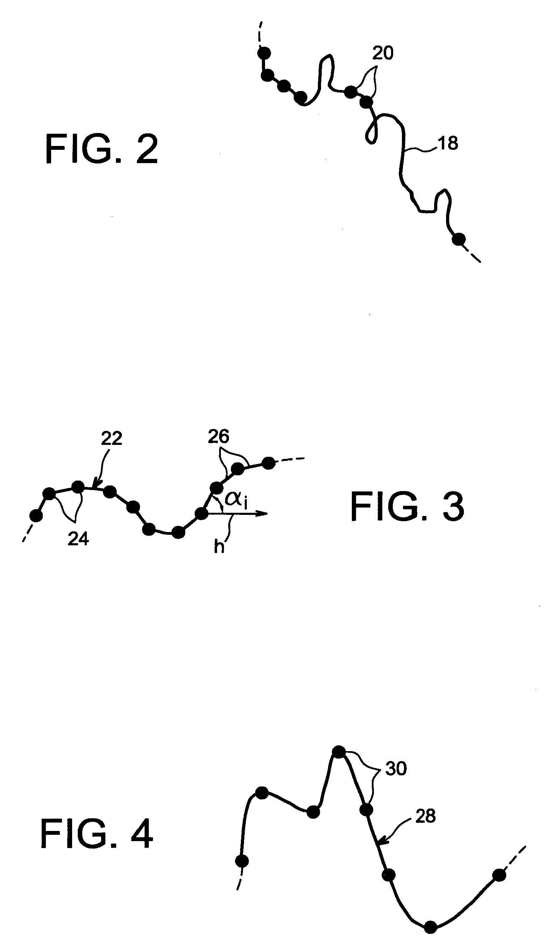

Ce cas est schématiquement illustré par la figure 2 où l'on voit un tel support 18, du genre d'une ficelle, et formant donc une ligne, plus précisément une courbe gauche. Des capteurs 20 sont fixés sur ce support, le long de ce dernier.

Un support sans rigidité est adapté à l'acquisition de la forme d'un matériau tel qu'un textile par exemple. On peut mesurer ainsi, par exemple, les déformations d'un tissu ou la manière dont ce tissu tombe. Les capteurs sont fixés au textile de façon que les distances respectives entre les capteurs soient connues, à l'état dit de repos, c'est-à-dire lorsque le textile est entièrement étiré et présente donc des parties planes. Deux sous-cas se présentent alors.

1a. le nombre de capteurs est suffisament grand pour que les données fournies par les capteurs procurent un échantillonnage local de la surface que l'on veut analyser. Par exemple, un ensemble d'accéléromètres et de magnétomètres permettent alors d'acquérir les tangentes locales à la surface du textile étudié.

Par analogie avec le théorème de Shannon, on peut déduire le nombre de capteurs, nécessaires pour analyser une courbe ou une surface donnée, de l'analyse des fréquences spatiales présentes dans la courbe ou la surface. Le nombre de capteurs sera au moins égal à deux fois la valeur de la fréquence maximale.

Si les capteurs sont beaucoup plus nombreux que les fréquences spatiales présentes dans la forme à analyser, on se trouve dans une situation de sur-échantillonnage. Dans ce cas, le procédé permettant de retrouver la courbe ou la surface acquise est le suivant.

On assimile chaque portion entourant un capteur à un segment de droite (dans le cas d'un support en forme de ligne) ou à une portion de plan (dans le cas d'un support formant une surface). La reconstruction se fait par la juxtaposition successive de tous les segments ou toutes les portions élémentaires, chaque segment ou portion étant orienté en fonction de la valeur fournie par le capteur porté par ce segment ou cette portion.

A ce sujet, on se reportera à la figure 3 qui est relative à la reconstruction par des éléments rectilignes. On y voit un support formant une ligne 22. On voit également les capteurs 24 fixés à ce support 22. Entre les capteurs, le support est assimilé à des segments de droite 26. On a également représenté l'angle $\alpha_i$ fait par le $i^{\text{ème}}$ de ces segments 26 avec une direction horizontale h, ce segment étant tangent à la forme étudiée, au point où se trouve l'un des deux capteurs qui délimitent ce segment.

1b. Les capteurs sont en nombre « limité », proche de deux fois la valeur de la fréquence maximale.

Dans ce cas, le procédé conforme à l'invention consiste à attribuer un modèle particulier qui n'est plus localement linéaire comme dans le cas 1a mais plus élaboré.

On modélise par exemple la courbe par une formulation analytique, par exemple par une courbe de Béziers à deux ou trois dimensions ou encore par une B-spline à deux ou trois dimensions. Quant à la surface, elle peut être modélisée par un polynôme du type $f(x,y,z)=0$ ou par une surface de Béziers.

Dans le cas où les capteurs fournissent des signaux représentatifs des angles localement mesurés sur la courbe ou la surface étudiée, on associe les mesures ainsi obtenues à la formulation analytique de ces mêmes angles locaux, formulation qui est déduite du modèle choisi.

La résolution du système d'équations ainsi obtenu fournit une estimation des paramètres du modèle. Dans ce cas, il convient de noter que les surfaces et les courbes que l'on mesure doivent satisfaire des critères de fréquences spatiales, qui sont compatibles avec le nombre de capteurs du dispositif conforme à l'invention que l'on utilise. A ce sujet, on se reportera au paragraphe la ci-dessus.

A titre purement indicatif et nullement limitatif, on donne ci-après un exemple de procédé de calcul d'une surface acquise, dans le cas d'un calcul direct.

Soit $z=f(x,y)$ l'équation de la surface recherchée. On note Pi1, Pi2... les mesures des capteurs au point Mi. On note aussi ACi l'abscisse curviligne connue du point Mi.

Les capteurs fournissent par exemple les valeurs des inclinaisons du plan tangent local en Mi par rapport à la direction verticale et au champ magnétique terrestre, ces capteurs étant des accéléromètres et des magnétomètres dans l'exemple considéré. Ces valeurs sont converties en des tangentes locales à la surface recherchée.

Cette surface recherchée est déterminée en résolvant le système des trois équations suivantes :

- Pi1=df(xi,yi)/dxi
- Pi2=df(xi,yi)/dyi
- Abscisse curviligne au point (xi,yi)=ACi.

Dans ce système d'équations, Pi1 et Pi2 correspondent aux tangentes et ACi correspond à la position relative des capteurs avant la déformation de la surface étudiée.

On peut avantageusement lisser les fonctions linéaires par partie Pi1 et Pi2 avant l'intégration permettant de retrouver la description de la forme recherchée, par exemple en utilisant des splines cubiques ou des RBF c'est-à-dire des fonctions à base radiale (en anglais, *radial basis functions*).

A titre purement indicatif et nullement limitatif, on donne ci-après un autre exemple de procédé conforme à l'invention, pour le calcul d'une surface acquise, dans le cas d'un calcul inverse.

Ce calcul nécessite plusieurs étapes.

Etape 1 : on fait une hypothèse sur un paramètre **q**, ce qui se traduit par l'équation suivants :

$$Z=f(x, \quad y \quad ,\mathbf{q0})$$

où **q0** est le vecteur de paramètres initial qui définit la représentation initiale de la courbe.

Etape 2 : au moyen de cette équation, on détermine les mesures estimées Ri des valeurs des tangentes locales, par exemple :

```
Ri1=df(xi,    yi,    q0)/dx
```

(calcul des tangentes localement).

Etape 3 : on détermine également les mesures estimées Ei des sorties des capteurs angulaires supposés situés aux points (xi, yi).

Etape 4 : au moyen des résultats obtenus dans les étapes 2 et 3, on calcule la distance entre les sorties réelles des capteurs Pi et leurs valeurs estimées Ei.

Etape 5 : si la distance calculée est inférieure à un seuil prédéfini, par exemple égal à 1% de la valeur mesurée par les capteurs, on affiche le résultat.

Etape 6 : si cette distance est supérieure ou égale à ce seuil prédéfini, on met à jour par des méthodes classiques (par exemple une méthode de descente de gradient) le vecteur **q0** en le remplaçant par un nouveau vecteur **q1,** qui est le vecteur des paramètres de la courbe ou de la surface à la première itération, et l'on recommence la deuxième étape avec ce nouveau vecteur.

2. Le support est rigide (voir la figure 4 où un exemple d'un tel support est schématiquement représenté, ce support épousant la forme d'une ligne 28 et portant des capteurs 30, la longueur des intervalles entre les capteurs étant liée à la courbure maximale mesurable et dépendant des propriétés de rigidité du matériau précontraint dont est constitué le support) ; c'est par exemple le cas d'un support présentant des propriétés de courbure intrinsèque, tel qu'un rouleau de négatifs photographiques.

Dans ce cas, le procédé est analogue au procédé que l'on a expliqué dans le paragraphe 1b ci-dessus.

Toutefois, dans ce cas 2, on peut alors choisir, de préférence, un modèle mathématique rendant compte des propriétés intrinsèques de la matière utilisée pour le support.

L'invention présente alors deux avantages. D'une part, on peut alors limiter le nombre de capteurs requis, éventuellement jusqu'à une limite optimale en adéquation avec le modèle géométrique de la matière. D'autre part, la manipulation du dispositif de l'invention est alors rendue plus facile par les propriétés de rigidité du support.

3. Cas où chaque point de mesure dispose également d'une capacité à mesurer la distance à ses plus proches voisins.

Dans ce cas, le procédé de reconstruction peut être en réalité plus simple puisque, à partir de l'un des points de mesure on peut reconstruire de proche en proche l'ensemble de la forme recherchée, en s'appuyant sur les informations angulaires et les informations de distance.

Il faut être capable, en première approximation, de disposer du vecteur complet de translation entre deux points de mesures et donc de disposer de trois grandeurs entre ces deux points. En général, on mesure plutôt l'orientation du vecteur (de 1 à 3 degrés de liberté) et la norme de ce vecteur.

4. Une autre variante du procédé objet de l'invention consiste à supprimer le support physique des capteurs.

Les capteurs sont alors mécaniquement indépendants les uns des autres.

Dans ce cas, on place les points de mesure en divers points d'une surface que l'on veut acquérir. Une telle surface peut être, par exemple, la surface du toit d'une maison ou d'un monument.

Puis en reconstruit de proche en proche la surface à partir des mesures, comme on l'a indiqué au paragraphe 3 ci-dessus.

De plus, des informations a priori sur la surface acquise (par exemple le fait que la surface soit constituée seulement de segments plans ou encore que la courbure maximale de cette surface soit égale à une valeur connue) permettent de limiter le nombre de points de mesure et de reconstruire l'ensemble des données, le recours aux informations connues a priori se traduisant par des techniques d'interpolation (utilisant par exemple un polynôme de degré donné ou une courbe décomposable en portions linéaires).

On donne ci-après divers avantages de la présente invention :

- elle conduit à un système d'acquisition de donnée en trois dimensions, qui est maniable et facile à utiliser ;
- étant donné qu'elle est fondée sur des mesures d'orientation (dérivée première), elle ne nécessite qu'une intégration, contrairement aux capteurs qui mesurent la courbure (dérivée seconde) et nécessitent donc une double intégration ;
- elle permet d'utiliser des capteurs classiques, peu coûteux, qui permettent la réalisation d'un dispositif conforme à l'invention de coût réduit ;
- elle est compatible avec des mesures portant sur des matériaux légers tels que les textiles et les papiers et peut donc être appliquée à de telles matières ;
- le dispositif objet de l'invention peut être soit intégré à un matériau de prime abord, soit rapporté sur un matériau déjà existant ;
- le dispositif objet de l'invention présente une échelonnabilité (en anglais, *scalability*) lui permettant de s'adapter à des applications de tailles variées ;
- l'invention permet en outre de suivre les variations de la forme d'une courbe ou d'une surface en fonction du temps.

A titre purement indicatif et nullement limitatif, on donne ci-après un autre exemple de l'invention.

Sur la périphérie d'une roue (non représentée) située dans un plan vertical, on place un dispositif conforme à l'invention (support en forme de ligne), dont la longueur est au moins égale au périmètre de cette roue.

Les capteurs utilisés sont des accéléromètres et sont placés régulièrement sur le dispositif, à une distance d les uns des autres. L'angle mesuré par chaque point de mesure correspond alors une inclinaison par rapport à une direction verticale, inclinaison qui varie d'un point au suivant de $\Delta\alpha$=d/R, R étant le rayon de la roue.

Mais un tel dispositif mesure aussi bien une déformation locale, par exemple une portion plane d'un pneu dégonflé, cette portion étant en contact avec le sol.

A titre purement indicatif et nullement limitatif, on donne encore ci-après un autre exemple de l'invention.

On utilise un support constitué par un circuit imprimé souple tel qu'un « flex ». Ce circuit imprimé souple a par exemple une longueur de 2 mètres et une largeur de 1 ou 2 cm.

A intervalle régulier, par exemple tous les cm, tous les 2cm ou tout les 5cm, on dispose un ensemble de quatre capteurs à plat sur le circuit (qui est par exemple en forme de ruban), par exemple deux accéléromètres et deux magnétomètres qui sont sensibles au champ magnétique terrestre. On peut se limiter à un seul type de capteur ou alterner les types (avec des limitations sur les performances du dispositif obtenu), ou utiliser d'autres types de capteurs.

Les capteurs sont des modèles à sortie numérique ou, au contraire, analogique.

Les informations sont collectées le long du circuit souple par un bus de type bus I2C. Elles sont recueillies par une interface I2C et envoyées vers un lien série RS ou un lien parallèle ou une interface USB ou transmises par une liaison sans fil de type Bluetooth ou WiFi. Elles arrivent enfin sur un PC où elles sont traitées selon l'un des procédés décrits ci-dessus.

Le résultat est utilisé dans un logiciel d'affichage à trois dimensions ou pour la commande d'une machine numérique.

**Revendications**

1. Procédé d'acquisition d'une forme géométrique, à savoir une courbe ou une surface, par détermination des coordonnées des points de cette courbe ou de cette surface, ce procédé étant **caractérisé en ce que** :

   - on place sur cette forme un ensemble de capteurs (4a, 4b, 20, 24, 30), les capteurs étant choisis parmi les accéléromètres ou les magnétomètres, chaque accéléromètre étant capables de restituer une inclinaison par rapport à la direction verticale et chaque magnétomètre étant capable de restituer une inclinaison par rapport à la direction du champ magnétique terrestre, en tant que signaux représentatifs de l'orientation de la courbe ou de la surface à l'emplacement de ce capteur,
   - on choisit un modèle mathématique de la courbe ou de la surface,
   - à partir des signaux, on détermine les paramètres du modèle mathématique, et
   - à partir de ces paramètres, on détermine la répartition spatiale des points de la forme géométrique.

2. Procédé selon la revendication 1, dans lequel les capteurs sont fixés à un support (6a, 6b, 18, 22, 28) fait d'une matière solide et déformable, apte à épouser la forme à acquérir.

3. Procédé selon la revendication 2, dans lequel le support forme une ligne (6a, 22, 28).

4. Procédé selon la revendication 2, dans lequel le support forme une surface (6b).

5. Procédé selon l'une quelconque des revendications 2 à 4, dans lequel le support (18) est souple.

6. Procédé selon l'une quelconque des revendications 1 à 5, dans lequel la forme à acquérir présente une ou plusieurs fréquences spatiales maximales et le nombre des capteurs est au moins égal, par unité de longueur ou de surface, à deux fois la valeur de la fréquence maximale, et l'on échantillonne localement la courbe ou la surface grâce aux capteurs.

7. Procédé selon l'une quelconque des revendications 1 à 5, dans lequel les capteurs sont mécaniquement indépendants les uns des autres, et l'on reconstruit de proche en proche la forme à acquérir, à partir des signaux fournis par les capteurs.

8. Procédé selon l'une quelconque des revendications 1 à 7, dans lequel on acquiert la forme d'une courbe ou d'une surface qui délimite un objet (2a, 2b).

9. Procédé selon l'une quelconque des revendications 1 à 7, dans lequel on acquiert la forme intrinsèque de la matière solide et déformable elle-même.

10. Procédé selon l'une quelconque des revendications 1 à 9, dans lequel chaque capteur est en outre prévu pour déterminer la distance qui le sépare des capteurs voisins, et dans lequel on reconstruit de proche en proche la forme à acquérir.

**11.** Dispositif d'acquisition d'une forme géométrique, à savoir une courbe ou une surface, ce dispositif étant **caractérisé en ce qu'**il comprend :

- un ensemble de capteurs (4a, 4b, 20, 24, 30), les capteurs étant choisis parmi les accéléromètres ou les magnétomètres, chaque accéléromètre étant capables de restituer une inclinaison par rapport à la direction verticale et chaque magnétomètre étant capable de restituer une inclinaison par rapport à la direction du champ magnétique terrestre, en tant que signaux représentatifs de l'orientation de la courbe ou de la surface à l'emplacement de ce capteur, et
- des moyens électroniques (8a, 8b) de traitement des signaux fournis par les capteurs, ces moyens étant prévus pour déterminer, à partir d'un modèle mathématique de la courbe ou de la surface, les paramètres du modèle mathématique et pour déterminer, à partir de ces paramètres, la répartition spatiale des points de la forme géométrique.

**12.** Dispositif selon la revendication 11, dans lequel les capteurs sont fixés à un support (6a, 6b, 18, 22, 28) fait d'une matière solide et déformable, apte à épouser la forme à acquérir.

**13.** Dispositif selon la revendication 11, dans lequel les capteurs sont mécaniquement indépendants les uns des autres.

**14.** Dispositif selon l'une quelconque des revendications 11 à 13, dans lequel les capteurs sont choisis parmi les accéléromètres et les magnétomètres.

**Patentansprüche**

**1.** Verfahren zum Aufnehmen einer geometrischen Form, nämlich einer Kurve oder einer Fläche, durch Bestimmen von Koordinaten von Punkten dieser Kurve oder dieser Fläche, wobei das Verfahren **gekennzeichnet ist durch**:

- ein Platzieren eines Satzes von Sensoren (4a, 4b, 20, 24, 30) auf dieser Form, wobei die Sensoren ausgewählt sind aus Beschleunigungssensoren oder Magnetometern, wobei jeder Beschleunigungssensor in der Lage ist, eine Neigung bezüglich der vertikalen Richtung auszugeben, und jeder Magnetometer in der Lage ist, eine Neigung bezüglich der Richtung des Erdmagnetfelds auszugeben, als Signale, welche die Orientierung der Kurve oder der Fläche am Standort des Sensors repräsentieren,
- ein Auswählen eines mathematischen Modells der Kurve oder der Fläche,

- ein Bestimmen der Parameter des mathematischen Modells ausgehend von den Signalen, und
- ein Bestimmen der räumlichen Verteilung der Punkte der geometrischen Form ausgehend von diesen Parametern.

**2.** Verfahren nach Anspruch 1, wobei die Sensoren an einem Träger (6a, 6b, 18, 22, 28) befestigt sind, welcher aus einem festen und deformierbaren Material hergestellt ist, welches in der Lage ist, sich der aufzunehmenden Form anzupassen.

**3.** Verfahren nach Anspruch 2, wobei der Träger eine Linie (6a, 22, 28) bildet.

**4.** Verfahren nach Anspruch 2, wobei der Träger eine Fläche (6b) bildet.

**5.** Verfahren nach einem der Ansprüche 2 bis 4, wobei der Träger (18) biegsam ist.

**6.** Verfahren nach einem der Ansprüche 1 bis 5, wobei die aufzunehmende Form eine oder mehrere maximale räumliche Frequenzen darstellt und die Anzahl der Sensoren pro Einheitslänge oder Einheitsfläche wenigstens gleich zwei mal dem Wert der maximalen Frequenz ist, und wobei die Kurve oder die Fläche mittels der Sensoren lokal vermessen wird.

**7.** Verfahren nach einem der Ansprüche 1 bis 5, wobei die Sensoren mechanisch voneinander unabhängig sind, und wobei die aufzunehmende Form nach und nach anhand der durch die Sensoren gelieferten Signale rekonstruiert wird.

**8.** Verfahren nach einem der Ansprüche 1 bis 7, wobei die Form einer Kurve oder einer Fläche aufgenommen wird, welche ein Objekt (2a, 2b) begrenzt.

**9.** Verfahren nach einem der Ansprüche 1 bis 7, wobei die intrinsische Form des festen und deformierbaren Materials selbst aufgenommen wird.

**10.** Verfahren nach einem der Ansprüche 1 bis 9, wobei jeder Sensor ferner dazu vorgesehen ist, den Abstand zu bestimmen, um den er von benachbarten Sensoren beabstandet ist, und wobei nach und nach die aufzunehmende Form rekonstruiert wird.

**11.** Vorrichtung zum Aufnehmen einer geometrischen Form, nämlich einer Kurve oder einer Fläche, wobei die Vorrichtung **dadurch gekennzeichnet ist, dass** sie umfasst:

- ein Satz von Sensoren (4a, 4b, 20, 24, 30), wobei die Sensoren ausgewählt sind aus Beschleunigungssensoren oder Magnetometern, wobei jeder Beschleunigungssensor in der Lage ist, eine Neigung bezüglich der vertikalen Richtung auszugeben, und jeder Magnetometer in der Lage ist, eine Neigung bezüglich der Richtung des Erdmagnetfelds auszugeben, als Signale, welche die Orientierung der Kurve oder der Fläche am Standort des Sensors repräsentieren, und
- elektronische Mittel (8a, 8b) zur Verarbeitung der von den Sensoren ausgegebenen Signale, wobei diese Mittel dazu vorgesehen sind, ausgehend von einem mathematischen Modell der Kurve oder der Fläche die Parameter des mathematischen Modells zu bestimmen und ausgehend von diesen Parametern die räumliche Verteilung von Punkten der geometrischen Form zu bestimmen.

12. Vorrichtung nach Anspruch 11, wobei die Sensoren an einem Träger (6a, 6b, 18, 22, 28) befestigt sind, welcher aus einem festen und deformierbaren Material hergestellt ist, welches in der Lage ist, sich der aufzunehmenden Form anzupassen.

13. Vorrichtung nach Anspruch 11, wobei die Sensoren voneinander mechanisch unabhängig sind.

14. Vorrichtung nach einem der Ansprüche 11 bis 13, wobei die Sensoren aus Beschleunigungssensoren und Magnetometern ausgewählt sind.

**Claims**

1. Method for acquisition of a geometric shape, namely a curve or a surface, by determining the coordinates of the points on this curve or this surface, this method being **characterised in that**:

   - a set of sensors (4a, 4b, 20, 24, 30) is placed on this shape, the sensors being chosen among accelerometers or magnetometers, each accelerometer being capable of providing an inclination from the vertical direction and each magnetometer being capable of providing an inclination from the direction of the terrestrial magnetic field, as signals representative of the orientation of the curve or the surface at the location of this sensor,
   - a mathematical model of the curve or the surface is chosen,
   - mathematical model parameters are determined from the signals, and
   - the spatial distribution of the points of the geometric shape is determined, using these parameters.

2. Method according to claim 1, in which the sensors are fixed to a support (6a, 6b, 18, 22, 28) made of a deformable solid material capable of matching the shape to be acquired.

3. Method according to claim 2, in which the support forms a line (6a, 22, 28).

4. Method according to claim 2, in which the support forms a surface (6b).

5. Method according to any one of claims 2 to 4, in which the support (18) is flexible.

6. Method according to any one of claims 1 to 5, in which the shape to be acquired has one or several maximum spatial frequencies and the number of sensors per unit length or unit area is equal to at least twice the value of the maximum frequency, and the curve or the surface is locally sampled using the sensors.

7. Method according to any one of claims 1 to 5, in which the sensors are mechanically independent of each other, and the shape to be acquired is reconstructed step by step using signals output by the sensors.

8. Method according to any one of claims 1 to 7, in which the shape of a curve or a surface that delimits an object is acquired (2a, 2b).

9. Method according to any one of claims 1 to 7, in which the intrinsic shape of the solid and deformable material itself is acquired.

10. Method according to any one of claims 1 to 9, in which each sensor is also designed to determine the distance that separates it from nearby sensors, and in which the shape to be acquired is reconstructed step by step.

11. Device for acquisition of a geometric shape, namely a curve or a surface, this device being **characterised in that** it comprises:

   - a set of sensors (4a, 4b, 20, 24, 30), the sensors being chosen among accelerometers or magnetometers, each accelerometer being capable of providing an inclination from the vertical direction and each magnetometer being capable of providing an inclination from the direction of the terrestrial magnetic field, as signals representative of the orientation of the curve or the surface at the location of this sensor, and
   - electronic means (8a, 8b) for processing signals output by the sensors, these means being designed to determine mathematical model parameters using a mathematical model of the curve or the surface, and to determine the spatial distribution of the points of the geometric shape, using these parameters.

**12.** Device according to claim 11, in which the sensors are fixed to a support (6a, 6b, 18, 22, 28) made of a solid and deformable material, capable of matching the shape to be acquired.

**13.** Device according to claim 11, in which the sensors are mechanically independent of each other.

**14.** Device according to any one of claims 11 to 13, in which the sensors are chosen to be accelerometers or magnetometers.

FIG. 1A

# FIG. 1B

FIG. 2

20

18

22    26

24    $\alpha_i$    FIG. 3

h

30

28

FIG. 4

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 6127672 A
- US 2002025074 A
- US 2003030443 A
- US 2004139801 A

**Littérature non-brevet citée dans la description**

- A surface profile reconstruction method based on multisensor capacitive transducers. measurement. Institue of Measurement and Control, 01 Mars 1994, vol. 13, 77-84